**Europäisches Patentamt**

(19) **European Patent Office**

**Office européen des brevets**

(11) Veröffentlichungsnummer: **0 021 309**
**B1**

(12) # EUROPÄISCHE PATENTSCHRIFT

(45) Veröffentlichungstag der Patentschrift:
13.04.83

(21) Anmeldenummer: 80103352.3

(22) Anmeldetag: 16.06.80

(51) Int. Cl.³: **H 04 M 15/22**, H 04 M 3/42

(54) Schaltungsanordnung für Fernmeldevermittlungsanlagen, insbesondere Fernsprechvermittlungsanlagen, mit zeitlicher Staffelung der Gebührenzählimpulsfrequenzen.

(30) Priorität: 26.06.79 DE 2925794

(43) Veröffentlichungstag der Anmeldung:
07.01.81 Patentblatt 81/1

(45) Bekanntmachung des Hinweises auf die Patenterteilung:
13.04.83 Patentblatt 83/15

(84) Benannte Vertragsstaaten:
FR GB IT SE

(56) Entgegenhaltungen:
DE-B-1 249 357
DE-B-2 218 129
DE-C-916 307
US-A-2 887 536
US-A-3 150 236
US-A-3 934 095
IEEE TRANSACTIONS ON COMMUNICATION TECHNOLOGY, Band COM-14, Heft 6, Dezember 1966, New York, US, E. J. GLENNER et al.: »System design parameters of overseas AUTO-VON switching system«, Seiten 685—692

(73) Patentinhaber: SIEMENS AKTIENGESELLSCHAFT,
Berlin und München Wittelsbacherplatz 2,
D-8000 München 2 (DE)

(72) Erfinder: Hilliges, Friedrich, Spechtstrasse 15,
D-8031 Eichenau (DE)

TELECOMMUNICATIONS AND RADIO ENGINEERING, Band 31/32, Heft 11, November 1977, Washington, US, L.D. HYINA et al.: »The AMTC-4 automatic intercity telephone station«, Seiten 8-17
PROCEEDINGS OF THE NATIONAL ELECTRONICS CONFERENCE, Band 31, 1977, Oak Brook, Illinois, US, A.M. COTRONEO et al.: »Studies on implementation of features in a modern switch for the italian network«, Seiten 273—278

Schaltungsanordnung für Fernmeldevermittlungsanlagen, insbesondere
Fernsprechvermittlungsanlagen, mit zeitlicher Staffelung der Gebührenzählimpulsfrequenzen

Die Erfindung betrifft eine Schaltungsanordnung für Fernmeldevermittlungsanlagen, insbesondere Fernsprechvermittlungsanlagen, in denen Fernsprechfernverbindungen mit Hilfe von gemeinsamen Steuereinrichtungen über freie von in Bündel zusammengefaßte Verbindungsleitungen durch Wahl einer Ortskennzahl und einer Teilnehmernummer hergestellt werden, und in denen für Fernsprechverbindungen nach Melden des gerufenen Teilnehmers Gebührenzählimpulse zur Aufsummierung für den jeweils rufenden Teilnehmer erzeugt werden, und in denen ebenfalls mit Hilfe der gemeinsamen Steuereinrichtung die Frequenz der für eine Fernsprechfernverbindung erzeugten Gebührenzählimpulse einerseits durch die räumliche Entfernung bestimmt und andererseits in Abhängigkeit von der Tageszeit und/oder von Kalendertagen, z. B. Wochentagen, allgemeinen Feiertagen und dergleichen, allgemein herabgesetzt wird.

Schaltungsanordnungen dieser Art sind in großer Vielfalt bekannt, z. B. durch PROCEEDINGS OF THE NATIONAL ELECTRONICS CONFERENCE, Band 31, 1977, Oak Brook, Illinois US, A. M. COTRONEO et al.: »Studies on implementation of features in a modern switch for the italian network«, Seiten 273—278. Schaltungsanordnungen der ·bekannten Art sind bei der Deutschen Bundespost in großer Anzahl in Benutzung. Die nach Tageszeit und nach Wochentagen im Hinblick auf die Gebührenzählimpulsfrequenzen gestaffelte Gebührenzählimpulsgabe bewirkt eine bessere Verteilung der insgesamt anfallenden Verkehrsbelastung. Durch Feierabendtarife und Nacht- und Feiertagstarife werden die Fernsprechteilnehmer veranlaßt, ihre Ferngespräche außer in den typischen Hauptverkehrszeiten auch zu Tageszeiten bzw. an Kalendertagen herzustellen, zu bzw. an denen für gleiche Gesprächsentfernungen niedrigere Gebührenzählimpulsfrequenzen zum Tragen kommen, wodurch sich für den rufenden Teilnehmer der Vorteil der Gebührenersparnis ergibt.

Probleme ergeben sich bei einem Einsatz von Schaltungsanordnungen der eingangs genannten bekannten Art durch eine besondere Häufung von Gesprächswünschen — also durch eine besondere Spitzenbelastung — zu Beginn und vor Ende von Tageszeiten bzw. Kalendertagen mit herabgesetzten Gebührenzählimpulsfrequenzen. So kommt es vor, daß unmittelbar nach dem Zeitpunkt der Herabsetzung der Gebührenzählimpulsfrequenz die wesentlichsten Fernverbindungswege so überlastet werden, daß ein relativ nur geringer Anteil der im Aufbau befindlichen Fernsprechfernverbindungen erfolgreich ist; die überwiegende Zahl der im Aufbau befindlichen Fernsprechfernverbindungen werden durch Gassenbesetztfälle beendet.

In diesem Zusammenhang ist durch die DE-A-1 249 357 eine Schaltungsanordnung bekannt geworden, in der vorgesehen ist, Besetztfälle in Gassenbesetztfälle und Teilnehmerbesetztfälle zu unterscheiden. Im ersten Fall wird ein Durchschalteversuch über ein Koppelfeld wiederholt, während im zweiten Fall dem rufenden Teilnehmer Besetztzeichen ausgesendet wird. Durch eine Wiederholung der Durchschalteversuche in einem bestimmten Rhythmus wird in diesem bekannten Falle eine Verlusteinschränkung ohne eine nennenswerte Markierermehrbelastung ermöglicht. In diesem bekannten Falle handelt es sich jedoch um eine Verbindungsherstellung innerhalb einer Fernsprechnebenstellenvermittlungsanlage oder einer Fernsprechortsvermittlungsanlage. Handelt es sich dagegen um eine Herstellung von Fernsprechverbindungen — wie eingangs für die Erfindung als bekannt vorausgesetzt — so hat eine Wiederholung von Durchschalteversuchen über Fernsprechverbindungsfernleitungen zur Folge, daß über Fernsprechverbindungsfernleitungen bereits teilweise aufgebaute Fernsprechfernverbindungen vorübergehend einen Wartezustand einnehmen, der — aufs Ganze gesehen — wieder zu einer Erhöhung der Verkehrsbelastung der Fernverbindungsleitungsbündel führt, wenn generell bei allen Fernsprechfernverbindungen die Möglichkeit der Wiederholung von Durchschalteversuchen bei Gassenbesetztfällen vorgesehen wird.

Für die Erfindung besteht die Aufgabe, für die an die Fernsprechvermittlungen angeschlossenen Teilnehmer die praktisch bisher immer wieder auftretenden Blockierungen zu vermeiden, ohne daß dies eine Einbuße an Gebühreneinnahmen für die betreffende Fernsprechverwaltung zur Folge hat. Die Vermeidung von Blockierungen bestimmter Verkehrsbeziehungen hat besondere Bedeutung für Behörden, Institutionen und Personen, welche mit Aufgaben für die Sicherheit und den Schutz der Bevölkerung (z. B. Katastrophenschutz) betraut sind. Soweit im Zusammenhang mit der Erfindung sich für die Vermittlungsstellen, ihre Steuereinrichtungen und ggf. für die an sie angeschlossenen Bündel von Verbindungsleitungen eine Mehrbelastung ergibt, soll vermieden werden, daß sich für die betreffende Fernsprechverwaltung hieraus eine Einbuße an Gebühreneinkünften ergibt.

Die gestellte Aufgabe wird erfindungsgemäß dadurch gelöst, daß die gemeinsame Steuereinrichtung bei Empfang einer zusätzlich zur Ortskennzahl und Teilnehmerrufnummer gewählten, insbesondere diesen vorausgehenden Sonderkennzahl im Zusammenhang der Herstellung einer Fernsprechfernverbindung ein Verzichtskennzeichen für diese Fernsprechfernverbindung speichert, und daß bei Suchwahlvorgängen zur Auswahl je einer freien Verbindungsleitung aus einem Bündel für mehrere gleichzeitig im Aufbau befindliche Fernsprechfernverbindungen die gemeinsame Steuereinrichtung für solche Fernspechfernverbindungen, für die ein Verzichtskennzeichen gespeichert ist, nur dann mit Vorrang gegenüber solchen Fernsprechfernverbindungen, für die kein Verzichtskennzeichen gespeichert ist, eine freie Verbindungsleitung aus dem betreffenden Bündel auswählt, wenn die von der Tageszeit und/oder vom Kalendertag abhängige Herabsetzung der für die verschiedenen Entfernungszonen vorgesehenen Gebührenzählimpulsfrequenzen wirksam geschaltet ist, anderenfalls aber für die verschiedenen Fernsprechfernverbindungen die Suchwahlvorgänge mit Gleichrang abwickelt, und daß die gemeinsame Steuereinrichtung nach Herstellung einer Fernsprechfernverbindung, für die ein Verzichtskennzeichen gespeichert ist, ein die Herabsetzung der Frequenz der Gebührenimpulse bewirkendes Kriterium für diese Fernsprechfernverbindung unwirksam schaltet.

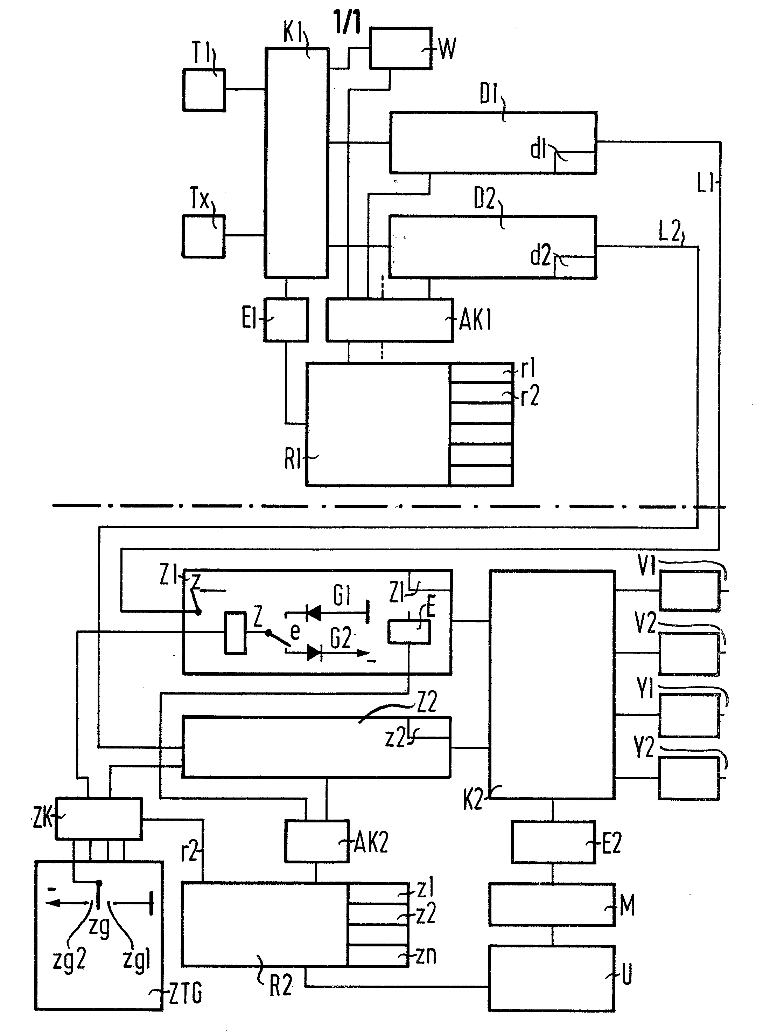

In der Zeichnung ist ein Ausführungsbeispiel der Erfindung nur im wesentlichen zu ihrem Verständnis beitragenden Bestandteilen dargestellt, worauf dieselbe jedoch keineswegs beschränkt ist.

Einrichtungen und Verfahren zur Herstellung von Selbstwählfernverbindungen sind vielfältig und allgemein bekannt. Es sei auf das Fernwählsystem 62 der Deutschen Bundespost hingewiesen, das in »Unterrichtsblätter der Deutschen Bundespost« beschrieben ist. In Heft Nr. 11 des Jahrganges 22 (1969) ist auf den Seiten 325 und 326 eine Übersicht über die gesamte Beschreibung dieses Fernwählsystems gegeben. Ferner sei auf das im Verlag R. Oldenburg (München) von Rudolf Führer herausgegebene Buch »Landesfernwahl II, Gerätetechnik« (zweite Auflage) hingewiesen, worin auf Seite 226 ff weitere Einzelheiten dieses Fernwählsystems der Landesfernwahltechnik der Deutschen Bundespost beschrieben werden. Dieses Fernwählsystem wird deshalb als Bestandteil des fachmännischen Wissens und somit als bekannt vorausgesetzt.

In der Zeichnung sind eine Ortsvermittlungsstelle (oberhalb der strichpunktierten Linie) und eine Fernvermittlungsstelle (unterhalb der strichpunktierten Linie) dargestellt. Wünscht einer der mit seiner Teilnehmerstelle an der Ortsvermittlungsstelle angeschlossenen Teilnehmer eine Fernsprechverbindung herzustellen, so hebt er zunächst den Handapparat an seiner Teilnehmerstation ab. Dadurch entsteht bekanntlich ein Anrufanreiz in der diesem Teilnehmer zugeordneten Teilnehmeranschlußschaltung, wodurch der betreffende Teilnehmeranschluß auf nicht im einzelnen dargestellte Weise mit einem freien Wahlempfänger W über das Koppelfeld K1 verbunden wird. Das Koppelfeld kann in der angedeuteten Weise eine gestreckte Gruppierung, jedoch auch ebensogut eine Umkehrgruppierung aufweisen. Beispiele für beide Gruppierungsgrundtypen sind in der DE-B-1 276 115 dargestellt und beschrieben.

Zur Herstellung einer Verbindung von einer der Teilnehmerstellen T1 bis Tx aus wird in an sich bekannter Weise zunächst eine Teilnehmerleitungsschleife über die Teilnehmeranschlußleitung geschlossen, wodurch in der betreffenden Teilnehmeranschlußschaltung ein Anrufanreiz erzeugt wird, der veranlaßt, daß die betreffende Teilnehmerstelle über das Koppelfeld mit einem freien Wahlempfänger W verbunden wird. Dieser sendet einen Wählton über die durchgeschaltete Koppelfeldverbindung zu der betreffenden Teilnehmerstelle aus. Aufgrund des empfangenen Wähltones gibt der Teilnehmer an der Teilnehmerstelle z. B. T1, Wahlinformationen ab, z. B. mit Hilfe eines Nummernschalters oder mit Hilfe einer Wähltastatur. Die einzelnen Ziffern werden in betreffenden Wahlempfängern W als Wahlinformationen empfangen.

Bei einer gewünschten Verbindung kann es sich um eine interne Ortsverbindung, jedoch auch um eine externe Fernverbindung handeln. Wünscht der betreffende Teilnehmer eine Fernverbindung herzustellen, so wählt er an erster Stelle die Verkehrsausscheidungsziffer Null. Bei Herstellung einer Ortsverbindung wählt der rufende Teilnehmer lediglich die Teilnehmerrufnummer des von ihm gewünschten anderen Teilnehmers, mit dem er verbunden werden will.

Wünscht der betreffende Teilnehmer eine Fernverbindung herzustellen, so wählt er nach Abgabe der Verkehrsausscheidungsziffer Null die für die herzustellende Fernverbindung maßgebende mehrstellige Ortskennzahl, die eine bestimmte ferne Ortsvermittlungsstelle kennzeichnet. Wird nun im Wahlempfänger W die Verkehrsausscheidungsziffer Null empfangen, so wird die betreffende Teilnehmerstelle T1 über das Koppelfeld K1 von dem betreffenden Wahlempfänger zu einem freien Leitungssatz, z. B. D1, umgekoppelt. Siehe hierzu die DE-B-1 256 265. Die in der Zeichnung dargestellte Ortsvermittlungsstelle oberhalb der strichpunktierten Linie ist mit der Fernvermittlungsstelle unterhalb der strichpunktierten Linie über ein Bündel von Verbindungsleitungen L1, L2 und weitere verbunden. Diesen Verbindungsleitungen sind Leitungsabschlußschaltungen D1 und D2 zugeordnet. Sofern es sich bei diesen Verbindungsleitungen um solche handelt, die innerhalb einer Vermittlungsstelle verlaufen, können die Leitungabschlußschaltungen D1 und D2 auch entfallen.

Hat ein rufender Teilnehmer also die Verkehrsausscheidungsziffer Null gewählt, so wird er über eine freie Verbindungsleitung, z. B. L1 mit einem freien Zählimpulsgeber, z. B. Z1 verbunden. Die vom rufenden Teilnehmer nach der Verkehrsausscheidungsziffer gewählten weiteren Ziffern stellen die Ortskennzahl dar, die in an sich bekannter Weise aus drei oder vier Ziffern besteht. Es ist eine Anzahl von Registern vorgesehen, von denen ein Register R2 angedeutet ist. Es enthält eine Anzahl von Speichereinheiten z1 bis zn, wobei diese Speichereinheiten den Zählimpulsgebern Z1, Z2 und weiteren individuell zugeordnet sein können oder mit Hilfe von Adressen diesen Zählimpulsgebern fallweise zugeordnet werden können. Ebensogut kann auch eine größere Anzahl von Registern vorgesehen werden, wobei jedes dieser Register für die Dauer der Herstellung einer Verbindung einem hierbei belegten Zählimpulsgeber vorübergehend fest zugeordnet wird.

Die zur Herstellung einer Fernsprechfernverbindung gewählte Ortskennzahl wird in der dem belegten Zählimpulsgeber, z. B. Z1, zugeordneten Speichereinheit, z. B. z1, im Register R2 gespeichert. Sobald die Ortskennzahl vollständig gespeichert vorliegt, wird sie an den zentralen Umwerter U übertragen. Dieser gibt eine Information über ein anzusteuerndes Fernleitungsbündel an den zentralen Markierer M, der mit Hilfe der Einstelleinrichtung E2 eine Auswahl unter den freien Fernleitungen des betreffenden Fernleitungsbündels trifft und außerdem eine Verbindung über das Koppelfeld K2 zu der betreffenden Leitungsabschlußschaltung der ausgewählten Fernverbindungsleitung herstellt. In der Zeichnung sind zwei Bündel von Fernverbindungsleitungen dargestellt, von denen das eine mit V1 bis V2 und das andere mit Y1 bis Y2 bezeichnet ist. Die Herstellung dieser Verbindungen über das Koppelfeld K2 möge in der Weise vor sich gehen, wie es in der DE-B-1 226 165 beschrieben ist.

Im Zusammenhang mit der Herstellung einer Verbindung gibt der zentrale Umwerter außerdem ein Zonenkennzeichen ab, mit welchem er die Gebührenzone kennzeichnet, die für die im Aufbau befindliche Fernsprechfernverbindung maßgebend ist, und zwar für die Aussendung von Gebührenzählimpulsen von dem betreffenden Zählimpulsgeber zum Gebührenzähler des rufenden Teilnehmers. Hierzu sei auf die DE-B-2 218 129 verwiesen. Außer dem Anschaltekoppler AK2 zur Verbindung der Zählimpulsgeber Z1, Z2 usw. mit dem Register R2 ist ein Zonenkoppler ZK zur Verbindung der Zählimpulsgeber jeweils mit einem bestimmten Ausgang eines Zeittaktgebers ZTG vorgesehen. Zwischen dem Zeittaktgeber ZTG und dem Zonenkoppler ZK ist eine Mehrzahl von Leitungsadern angedeutet. Der Zeittaktgeber ZTG gibt über diese Leitungen mit von Leitung zu Leitung unterschiedlicher Frequenz Zeittaktimpulse ab, die zur Bildung und Aussendung von Gebührenzählimpulsen in bzw. von einem belegten Zählimpulsgeber dienen. Dies ist bereits in weiteren Einzelheiten in der genannten DE-B-2 218 129 erläutert. Außerdem ist es bereits bekannt, die Frequenz der für eine Fernsprechfernverbindung erzeugten Gebührenzählimpulse außer durch die räumliche Entfernung auch in Abhängigkeit von der Tageszeit und von Kalendertagen, z. B. bestimmten Wochentagen, allgemeinen Feiertagen und dergl., zu bestimmen. Während an den normalen Arbeitstagen tagsüber den verschiedenen Gebührenzonen nach Entfernung gestaffelt höhere Gebührenzählimpulsfrequenzen zugeordnet sind, und zwar den Zonen der weiteren Entfernungen die höheren Gebührenzählimpulsfrequenzen, sind demgegenüber zur Abendzeit ebenfalls nach Entfernung gestaffelt niedrigere Gebührenzählimpulsfrequenzen vorgesehen; nachts, an Sonntagen und an allgemeinen Feiertagen sind ebenfalls nach Entfernung gestaffelt Gebührenzählimpulsfrequenzen vorgesehen, die gegenüber den an den Abenden geltenden Gebührenzählimpulsfrequenzen noch niedriger angesetzt sind.

Erfindungsgemäß ist nun vorgesehen, daß eine gemeinsame Steuereinrichtung bei Empfang einer zusätzlich zur Ortskennzahl und Teilnehmerrufnummer gewählten, insbesondere diesen vorausgehenden Sonderkennzahl im Zusammenhang der Herstellung einer Fernsprechfernverbindung ein Verzichtskennzeichen für diese Fernsprechfernverbindung speichert. Bei dieser Sonderkennzahl möge es sich um eine Kennzahl handeln, die nicht als Ortskennzahl verwendet ist, z. B. eine Kennzahl, die mit der Ziffer Eins beginnt. Diese Sonderkennzahl kann von einem rufenden Teilnehmer gewählt werden, und zwar im Anschluß an die Verkehrsausscheidungsziffer Null und vor der Ortskennzahl. Anschließend an diese Sonderkennzahl wählt der rufende Teilnehmer die Ortskennzahl und die Teilnehmerrufnummer. Wird diese Sonderkennzahl im Zusammenhang der Herstellung einer Verbindung in dem betreffenden Register R2 empfangen, so speichert es für diese im Aufbau befindliche Fernsprechfernverbindung ein der Sonderkennzahl entsprechendes Verzichtskennzeichen. Dies kann z. B. in der vorübergehend oder bleibend dem betreffenden Zählimpulsgeber, z. B. Z1, zugeordneten Speichereinheit z1 im Register R2 geschehen. Mit der Wahl dieser Sonderkennzahl bringt der jeweils rufende Teilnehmer zum Ausdruck, daß er auf die in Abhängigkeit von der Tageszeit und/oder von Kalendertagen vorgesehene allgemeine Herabsetzung des Gebührentarifes verzichtet.

Das Register R2 wickelt die Verbindungsherstellung in der angedeuteten und bereits bekannten Weise ab. Bei Suchwahlvorgängen zur Auswahl je einer freien Verbindungsleitung aus einem Bündel von Verbindungsleitungen, z. B. V1, V2 usw., für mehrere gleichzeitig im Aufbau befindliche Fernsprechfernverbindungen bevorzugt das als gemeinsame Steuereinrichtung arbeitende Register R2 solche Fernsprechfernverbindungen, für die ein Verzichtskennzeichen gespeichert ist, und zwar mit Vorrang gegenüber solchen Fernsprechfernverbindungen, für die kein Verzichtskennzeichen gespeichert ist. Ist also das Register R2 gleichzeitig mit der Herstellung mehrerer Verbindungen befaßt, so wickelt es diejenigen Verbindungsherstellungen mit Vorrang ab, für die ein Verzichtskennzeichen gespeichert ist. Handelt es sich um Verbindungsherstellungen, bei denen für jede dieser Verbindungen je eine freie Verbindungsleitung aus ein und demselben Bündel auszuwählen ist, so haben diejenigen im Aufbau befindlichen Verbindungen praktisch Vorrang, für die ein Verzichtskennzeichen gespeichert ist. Ist eine größere Anzahl von Registern vorgesehen, und ist vorgesehen, daß jeweils ein Register immer nur für eine einzige Verbindungsherstellung gleichzeitig arbeitet, so können diejenigen Register, die ein Verzichtskennzeichen gespeichert haben, den zentralen Umwerter U mit Vorrang belegen gegenüber denjenigen Registern, die kein Verzichtskennzeichen gespeichert haben. Wird die Verbindungsherstellung mit Hilfe eines Zentralsteuerwerkes abgewickelt, und nimmt dieses von sämtlichen Wahlempfangseinrichtungen die von den verschiedenen Teilnehmern eintreffenden Wahlinformationen auf, so bevorzugt es bei der Abwicklung der verschiedenen Verbindungsherstellungen jeweils diejenigen im Aufbau befindlichen Verbindungen, für die aufgrund einer eingetroffenen Sonderkennzahl ein Verzichtskennzeichen gespeichert ist. Für die Verwirklichung der Verbindungsherstellung mit Vorrang für solche im Aufbau befindlichen Fernsprechfernverbindungen, für die ein Verzichtskennzeichen gespeichert ist, gegenüber solchen im Aufbau befindlichen Fernsprechfernverbindungen, für die kein Verzichtskennzeichen gespeichert ist, gibt es eine Vielzahl von Möglichkeiten, für die hier nur einige Beispiele gegeben werden sollen, deren denkbare Vielfalt hier aber nicht beschrieben werden kann. Besondere Bedeutung hat dieser Vorrang für den Fall, daß die verschiedenen im Aufbau befindlichen Fernsprechfernverbindungen jeweils über Leitungen ein und desselben Verbindungsleitungsbündels weiter aufgebaut werden müssen. In diesem Falle betrifft der erläuterte Vorrang die Auswahl von freien Leitungen aus dem betreffenden Verbindungsleitungsbündel.

Der erwähnte Vorrang kommt nur zum Tragen, wenn die von der Tageszeit und/oder vom Kalendertag abhängige Herabsetzung der für die verschiedenen Entfernungszonen vorgesehenen Gebührenzählimpulsfrequenzen wirksam geschaltet ist. Erhält das Register R2 im Zusammenhang mit der Herstellung einer Verbindung das der gewählten Ortskennzahl entsprechende Zonenkennzeichen vom zentralen Umwerter U, so nimmt es über den Weg r2 eine Einstellung des Zonenkopplers ZK gemäß diesem Zonenkennzeichen und entsprechend der Adresse des betreffenden Zählimpulsgebers vor. Diesem Zählimpulsgeber wird der dem betreffenden Zonenkennzeichen entsprechende Gebührenzählimpulstakt zugeschaltet. Es wird also die vom Zonenkoppler ZK zum betreffenden Zählimpulsgeber, z. B. Z1, führende Leitung mit demjenigen Ausgang des Zeittaktgebers ZTG verbunden, der Gebührenzählimpulse mit der gemäß dem Zonenkennzeichen erforderlichen Gebührenzählimpulsfrequenz abgibt.

Es wurde bereits beschrieben, wie in Abhängigkeit von der Speicherung des Verzichtskennzeichens aufgrund des Empfanges der Sonderkennzahl vor der Ortskennzahl für eine im Aufbau befindliche Verbindung bewirkt wird, daß diese Verbindung gegenüber anderen — für die also kein Verzichtskennzeichen gespeichert ist — bevorzugt wird, indem das den Verbindungsaufbau abwickelnde Register R2, welches zugleich für mehrere im Aufbau befindliche Verbindungen tätig ist, solche im Aufbau befindlichen Verbindungen zuerst herstellt, für die das Verzichtskennzeichen gespeichert ist. Das als gemeinsame Steuereinrichtung arbeitende Register R2 wählt bei Suchwahlvorgängen zur Auswahl je einer freien Verbindungsleitung aus ein und demselben Bündel von Verbindungsleitungen für mehrere gleichzeitig im Aufbau befindliche Fernsprechverbindungen eine freie Verbindungsleitung für solche Fernsprechverbindungen, für die ein Verzichtskennzeichen gespeichert ist, aber nur dann mit Vorrang gegenüber solchen Fernsprechfernverbindungen, für die kein Verzichtskennzeichen gespeichert ist, aus dem betreffenden Bündel von Verbindungsleitungen aus, wenn die von der Tageszeit und/oder vom Kalendertag abhängige Herabsetzung der für die verschiedenen Entfernungszonen vorgesehenen Gebührenzählimpulsfrequenzen wirksam geschaltet ist; anderenfalls wickelt das Register R2 die für die verschiedenen Fernsprechfernverbindungen erforderlichen Suchwahlvorgänge mit Gleichrang ab. Das von einer nicht gezeigten Uhr abgegebene, die Herabsetzung der Gebührenzählimpulsfrequenzen bewirkende Kriterium kommt also im Zusammenhang mit dem für eine im Aufbau befindliche Verbindung gespeicherten Verzichtskennzeichen im Sinne der bevorzugten Verbindungsherstellung zur Wirkung. Diese bevorzugte Verbindungsherstellung findet also nur dann statt, wenn sowohl das Verzichtskennzeichen für eine im Aufbau befindliche Verbindung als auch das die Herabsetzung der Gebührenzählimpulsfrequenzen bewirkende Kriterium im Register R2 vorliegt. Wird die Verbindungsherstellung statt mit einem Register mit einem teilzentralen oder zentralen Steuerwerk abgewickelt, so laufen die erfindungsgemäßen Schaltvorgänge in entsprechender Weise ab. Die erläuterte Bevorzugung bei der Verbindungsherstellung kann sich auch in der Weise auswirken, daß bei einem Vorhandensein mehrerer Register, welche den zentralen Umwerter über ein selbstsperrendes Prüfvielfach belegen können, ein mit der Abwicklung einer bevorzugten Verbindungsherstellung befaßtes Register bei der Umwerterbelegung gegenüber den übrigen Registern bevorzugt ist. Eine Belegung eines zentralen Umwerters von mehreren Registern her mit unterschiedlichen Dringlichkeitsstufen ist in der DE-B-2 046 960 beschrieben.

Anschließend wird noch erläutert, wie die gemeinsame Steuereinrichtung nach Herstellung einer Fernsprechverbindung, für die ein Verzichtskennzeichen gespeichert ist, ein die Herabsetzung der Frequenz der Gebührenzählimpulse bewirkendes Kriterium für diese Fernsprechfernverbindung unwirksam schaltet. Der zentrale Zählimpulstaktgeber ZTG liefert kontinuierlich für jede der vorgesehenen Entfernungszonen Impulse jeweils mit einer der betreffenden Entfernungszone entsprechenden Impulsfrequenz. Der zentrale Zählimpulstaktgeber ZTG weist auf seiner Oberseite (in der Zeichnung) so viele Ausgänge auf, wie Entfernungszonen vorgesehen sind. Wie in der Zeichnung dargestellt ist, ist mit jedem Ausgang des zentralen Zählimpulstaktgebers ZTG ein Umschaltekontakt mit mittlerer Ruhelage vorgesehen. Dieser Kontakt weist also zwei Arbeitslagen auf, die mit »zg1« und »zg2« bezeichnet sind. In der Arbeitsstellung zg1 ist der betreffende Ausgang des zentralen Zählimpulstaktgebers mit Erdpotential verbunden, dagegen mit Minuspotential, wenn der Kontakt zg die Arbeitslage zg2 einnimmt. Der Kontakt zg wird impulsweise in jede seiner beiden Arbeitslagen geschaltet. Er nimmt seine Arbeitslage zg1 impulsweise mit einer Frequenz ein, die der nicht herabgesetzte Gebührenzählimpulsfrequenz der betreffenden Gebührenzone entspricht. Er nimmt dagegen seine Arbeitslage zg2 impulsweise mit einer Frequenz ein, die der in Abhängigkeit von der Tageszeit und von Kalendertagen herabgesetzten Gebührenzählimpulsfrequenz für die betreffende Gebührenzone entspricht. Sollten Impulse dieser beiden verschiedenen Impulsfolgen zeitlich zusammenfallen, so wird der eine von den betreffenden beiden Impulsen etwas verzögert, so daß die betreffenden beiden Impulse nacheinander abgegeben werden. Die Impulse dieser beiden Impulsfolgen haben — wie aus der Zeichnung ersichtlich ist — unterschiedliche Polarität. Die der nicht herabgesetzten Zählimpulsfrequenz entsprechenden Impulse sind Erdimpulse. Dagegen sind die der herabgesetzten Zählimpulsfrequenz entsprechenden Impulse mit Minuspotential gebildete Impulse.

Wie bereits erläutert wurde, wird über den Zonenkoppler ZK an einen Zählimpulsgeber, über den eine Verbindung hergestellt worden ist, der der betreffenden Gebührenzone entsprechende Ausgang des zentralen Zählimpulstaktgebers ZTG angeschaltet. Über den betreffenden Strompfad treffen nun bei einem Zählimpulsgeber, über den eine Verbindung durchgeschaltet worden ist, Impulse zweierlei Polarität ein, wobei die Impulse jeder der beiden Polaritäten einerseits der ermittelten Gebührenzone entsprechen, andererseits aber der nicht herabgesetzten Zählimpulsfrequenz bzw. der herabgesetzten Zählimpulsfrequenz. Mit Hilfe des Relais Z im betreffenden Zählimpulsgeber Z1 werden die Impulse einer der beiden Impulsfolgen aufgenommen. Von welcher der beiden Impulsfolgen die Impulse mit Hilfe des Relais Z aufgenommen werden, richtet sich nach der Stellung des Kontaktes e des Relais E. Befindet sich das Relais E in seiner Ruhelage, so ist die Mittelfeder des Umschaltekontaktes e mit dem Gleichrichter G2 verbunden. In diesem Fall empfängt das Relais Z die Impulse mit der nicht herabgesetzten Zählimpulsfrequenz. Wird das Relais E betätigt, und wird sein Kontakt e in die Arbeitslage gebracht, so ist der Strompfad über den Gleichrichter G1 geschlossen. In diesem Fall nimmt das Relais Z die mit der herabgesetzten Zählimpulsfrequenz vom zentralen Zählimpulstaktgeber ZTG abgegebenen Impulse auf. Mit Hilfe des Relais E kann also für einen Zählimpulsgeber Z1 bewirkt werden, daß entweder die Impulse mit der herabgesetzten Frequenz oder die Impulse mit der nicht herabgesetzten Frequenz mit Hilfe des Relais Z aufgenommen werden. Wie mit Hilfe dieser Impulse Gebührenzählimpulse zum Gebührenzähler des rufenden Teilnehmers ausgesendet werden, ist in der bereits genannten DE-B-22 18 129 erläutert.

Wie bereits erwähnt wurde, schaltet das Register R2 nach Herstellung einer Fernsprechfernverbindung, für die ein Verzichtskennzeichen gespeichert ist, ein die Herabsetzung der Frequenz der Gebührenzählimpulse bewirkendes Kriterium für diese Fernsprechfernverbindung unwirksam. Dies geschieht mit Hilfe des Relais E im Zählimpulsgeber Z1. Befindet sich der Kontakt e in der dargestellten Ruhelage, so nimmt das Relais Z — wie beschrieben — die Impulse mit der nicht herabgesetzten Frequenz auf. Sind die für die verschiedenen Gebührenzonen vorgesehenen Frequenzen der Gebührenzählimpulse in Abhängigkeit von der Tageszeit und/oder vom Kalendertag herabgesetzt, so wird bei jeder Verbindungsherstellung das Relais E im betreffenden Zählimpulsgeber betätigt. Infolgedessen nimmt das Relais Z die Impulse mit der herabgesetzten Impulsfrequenz vom zentralen Zählimpulstaktgeber ZTG auf. Dieses Kriterium (Einschaltung des Relais E) wird im steuernden Register R2 unwirksam geschaltet, z. B. unterdrückt, wenn bei Herstellung der betreffenden Fernsprechfernverbindung ein Verzichtskennzeichen für diese gespeichert worden ist. Aufgrund dieses Verzichtskennzeichens wird die Herabsetzung der Gebührenzählimpulsfrequenz für die betreffende Fernsprechfernverbindung unterdrückt.

Die bisherige Beschreibung erläuterte die erfindungsgemäße Arbeitsweise für eine Fernsprechfernvermittlungsstelle (in der Zeichnung unterhalb der Strichpunktierten Linie dargestellt). Von dieser Fernsprechfernvermittlungsstelle gehen mehrere Bündel von Verbindungsleitungen aus. Die Erfindung kann jedoch ebensogut auch in Ortsvermittlungsstellen eingesetzt werden. Bei diesen kann nur ein einziges Bündel von Verbindungsleitungen vorgesehen sein, das aus den Leitungen L1 bis L2 besteht, über die abgehende Fernsprechfernverbindungen von der Ortsvermittlungsstelle (in der Zeichnung oberhalb der strichpunktierten Linie) aus aufgebaut werden. Auch in der Ortsvermittlungsstelle kann die Sonderkennzahl für eine aufzubauende Fernsprechfernverbindung empfangen und für eine verbindungsindividuelle Speicherung des Verzichtskennzeichens ausgewertet werden. Dieses Verzichtskennzeichen kann auch hier zur bevorzugten Verbindungsherstellung in der beschriebenen Weise verwendet werden.

Außerdem besteht auch noch die Möglichkeit, daß bei Verbindungsherstellung in der Fernsprechfernvermittlungsstelle das die Verbindungsherstellung abwickelnde Register R2 bei Speicherung eines Verzichtskennzeichens für eine im Aufbau befindliche Fernsprechfernverbindung und bei Auftreten eines Gassenbesetztfalles nach einem ein Bündel von Fernverbindungsleitungen betreffenden Suchwahlvorgang eine Wiederholung desselben veranlaßt. Diese Wiederholung kann ein einziges Mal vorgesehen werden oder auch mehrere Male oder auch beliebig oft. Es handelt sich also hierbei um die Wiederholung einer Verbindungsherstellung, wobei die wiederholten Verbindungsherstellungsversuche jeweils lediglich zu einem Gassenbesetztfall führen und ein letzter Verbindungsherstellungsversuch die gewünschte Verbindungsherstellung erfolgreich beendet. Einzelheiten hierüber sind in der DE-B-12 49 357 beschrieben.

Schließlich ist noch auf eine weitere Ausgestaltungsmöglichkeit für die Erfindung hinzuweisen. Danach ist vorgesehen, daß die gemeinsame Steuereinrichtung für den Fall, daß das die Herabsetzung der Frequenz der Gebührenzählimpulse bewirkende Kriterium für eine Fernsprechverbindung unwirksam geschaltet ist, ein diesen Sachverhalt dem betreffenden rufenden Teilnehmer anzeigendes Hörsignal oder eine entsprechende Hinweisansage zu diesem Teilnehmer ausgesendet wird. Dieses Hörsignal bzw. die entsprechende Hinweisansage kann über den betreffenden Zählimpulsgeber, über den eine Fernsprechfernverbindung hergestellt worden ist, unmittelbar nach Eintreffen des Meldekennzeichens und vor endgültiger Verbindungsdurchschaltung zum rufenden Teilnehmer hin abgegeben werden. Dies kann mit Hilfe des Relais E geschehen.

**Patentansprüche**

1. Schaltungsanordnung für Fernmeldevermittlungsanlagen, insbesondere Fernsprechvermittlungsanlagen, in denen Fernsprechfernverbindungen mit Hilfe von gemeinsamen Steuereinrichtungen über freie von in Bündel zusammengefaßten Verbindungsleitungen durch Wahl einer Ortskennzahl und einer Teilnehmernummer hergestellt werden, und in denen für Fernsprechfernverbindungen nach Melden des gerufenen Teilnehmers Gebührenzählimpulse zur Aufsummierung für den jeweils rufenden Teilnehmer erzeugt werden, und in denen ebenfalls mit Hilfe der gemeinsamen Steuereinrichtung die Frequenz der für eine Fernsprechfernverbindung erzeugten Gebührenzählimpulse einerseits durch die räumliche Entfernung bestimmt und andererseits in Abhängigkeit von der Tageszeit und/oder von Kalendertagen, z. B. Wochentagen, allgemeinen Feiertagen und dergleichen, allgemein herabgesetzt wird, dadurch gekennzeichnet, daß die gemeinsame Steuereinrichtung bei Empfang einer zusätzlich zur Ortskennzahl und Teilnehmerrufnummer gewählten, insbesondere diesen vorausgehenden Sonderkennzahl im Zusammenhang der Herstellung einer Fernsprechfernverbindung ein Verzichtskennzeichen für diese Fernsprechfernverbindung speichert, und daß bei Suchwahlvorgängen zur Auswahl je einer freien Verbindungsleitung aus einem Bündel für mehrere gleichzeitig im Aufbau befindliche Fernsprechfernverbindungen die gemeinsame Steuereinrichtung für solche Fernsprechfernverbindungen, für die ein Verzichtskennzeichen gespeichert ist, nur dann mit Vorrang gegenüber solchen Fernsprechfernverbindungen, für die kein Verzichtskennzeichen gespeichert ist, eine freie Verbindungsleitung aus dem betreffenden Bündel auswählt, wenn die von der Tageszeit und/oder vom Kalendertag abhängige Herabsetzung der für die verschiedenen Entfernungszonen vorgesehenen Gebührenzählimpulsfrequenzen wirksam geschaltet ist, anderenfalls aber für die verschiedenen Fernsprechfernverbindungen die Suchwahlvorgänge mit Gleichrang abwickelt, und daß die gemeinsame Steuereinrichtung nach Herstellung einer Fernsprechfernverbindung, für die ein Verzichtskennzeichen gespeichert ist, ein die Herabsetzung der Frequenz der Gebührenzählimpulse bewirkendes Kriterium für diese Fernsprechfernverbindung unwirksam schaltet.

2. Schaltungsanordnung nach Anspruch 1, dadurch gekennzeichnet, daß die gemeinsame Steuereinrichtung bei Speicherung eines Verzichtskennzeichens für eine im Aufbau befindliche Fernsprechfernverbindung und bei Auftreten eines Gassenbesetztfalles nach einem ein Bündel von Verbindungsleitungen betreffenden Suchwahlvorgang eine Wiederholung, insbesondere mehrmalige Wiederholung, insbesondere in begrenzter Anzahl mehrmalige Wiederholung, des Suchwahlvorganges veranlaßt.

3. Schaltungsanordnung nach Anspruch 1, dadurch gekennzeichnet, daß die gemeinsame Steuereinrichtung für den Fall, daß das die Herabsetzung der Frequenz der Gebührenzählimpulse bewirkende Kriterium für eine Fernsprechverbindung unwirksam geschaltet ist, ein diesen Sachverhalt dem betreffenden rufenden Teilnehmer anzeigendes Hörsignal oder eine entsprechende Hinweisansage zu diesem Teilnehmer ausgesendet wird.

**Claims**

1. Circuit arrangement for telecommunications exchange systems, in particular telephone exchange systems, in which telephone trunk connections are established with the aid of common control devices via free connection lines, which are combined to form bundles, by dialling an area code and a subscriber number, and in which for telephone trunk connections, when the called subscriber has answered, charge counting pulses for the adding-up operation for the calling subscriber are produced, and in which, likewise with the aid of the common control device, the frequency of the charge counting pulses, which are produced for a telephone trunk connection, is determined by the spatial distance on the one hand and generally reduced in dependence upon the time of the day and/or upon calendar days, e. g. days of the week, public holidays and such like, on the other hand, characterised in that on receipt of a special code, which is dialled in addition to the area code and the subscriber number and in particular precedes the former, in association with the establishment of a telephone trunk connection, the common control device stores a renunciation character for this telephone trunk connection, and that in hunting operations for selecting a free connection line from a bundle for a plurality of telephone trunk connections, which are simultaneously in the process of being established, the common control device selects a free connection line from the relevant bundle for such telephone trunk connections, for which a renunciation character is stored only with priority relative to such telephone trunk connections for which a renunciation character is not stored, when the reduction, which is dependent upon the time of the day and/or the calendar day, of the charge counting pulse frequencies, which are provided for the different distance zones, is put into effect, otherwise, however, carries out the hunting operations with equal priority, and that following the establishment of a telephone trunk connection, for which a renunciation character is stored, the common control device renders ineffective a criterion, which effects the reduction of the frequency of the charge counting pulses, for this telephone trunk connection.

2. Circuit arrangement as claimed in claim 1, characterised in that when storing a renunciation character for a telephone trunk connection which is in the process of being established and when a path engagement case occurs after a hunting operation concerning a bundle of connection lines, the common control device initiates a repetition, in particular a repeated repetition, in particular a repetition repeated in a limited number, of the hunting operation.

3. Circuit arrangement as claimed in claim 1, characterised in that in the case that the criterion for a telephone connection, which effects the reduction of the frequency of the charge counting pulses, is rendered ineffective, the common control device transmits an audible signal, which indicates these circumstances to the respective calling subscriber, or an appropriate informative message to this subscriber.

**Revendications**

1. Circuit pour des centraux de télécommunication, notamment des centraux téléphoniques, dans lesquels des communications téléphoniques interurbaines sont établies à l'aide de dispositifs de commande communs, par l'intermédiaire de lignes, réunies en faisceaux, qui sont libres, par sélection d'un indicatif de localité et d'un numéro d'abonné, et dans lesquels pour des communications téléphoniques interurbaines, après réponse de l'abonné appelé, sont produites des impulsions de taxation destinées à être comptabilisées pour l'abonneé demandeur respectif, et dans lesquels également, à l'aide du dispositif de commande commun, la fréquence des impulsions de taxation produites pour une communication téléphonique interurbaine est d'une part déterminée par l'éloignement dans l'espace et d'autre part réduite de façon générale en fonction de l'heure du jour et/ou des jours du calendrier, par exemple les jours de la semaine, les jours fériés habituels et des jours semblables, caractérisé par le fait que lors de la réception d'un indicatif spécial, qui est sélectionné en plus de l'indicatif de localité et du numéro d'appel d'abonné, et qui notamment les précède, en liaison avec l'établissement d'une communication téléphonique interurbaine, le dispositif de commande commun mémorise un signal caractéristique de renoncement pour cette communication téléphonique interurbaine, et que lors d'opérations de recherche et de sélection pour la sélection respective d'une ligne de liaison libre à partir d'un faisceau pour plusieurs communications téléphoniques interurbaines qui sont simultanément en cours d'établissement, pour de telles communications téléphoniques interurbaines pour lesquelles est mémorisé un signal caractéristique de renoncement, le dispositif de commande commun ne sélectionne une ligne de liaison libre à partir du faisceau concerné, avec priorité vis-à-vis de communications téléphoniques interurbaines pour lesquelles aucun signal caractéristique de renoncement n'est mémorisé, que si la réduction, qui dépend de l'heure du jour et/ou du jour du calendrier, des fréquences des impulsions de taxation prévues pour les différentes zones de distance est effective, mais qu'autrement les opérations de recherche et de sélection pour les différentes communications téléphoniques interurbaines se déroulent avec la même hiérarchie, et qu'après établissement d'une communication téléphonique interurbaine pour laquelle un signal caractéristique de renoncement est mémorisé, le dispositif de commande commun rend inefficace un critère provoquant la réduction de la fréquence des impulsions de taxation pour cette communication téléphonique interurbaine.

2. Circuit suivant la revendication 1, caractérisé par le fait que lors de la mémorisation d'un signal caractéristique de renoncement pour une communication téléphonique interurbaine en cours d'établissement et lors de l'apparition d'un cas de congestion, après une opération de recherche et de sélection concernant un faisceau de lignes de liaison, le dispositif de commande commun provoque une répétition, notamment une répétition multiple, et notamment une répétition multiple en nombre limité, de l'opération de recherche et de sélection.

3. Circuit suivant la revendication 1, caractérisé par le fait que dans le cas où le critère qui provoque la réduction de la fréquence des impulsions de taxation est rendu inefficace pour une communication téléphonique, le dispositif de commande commun envoie à l'abonné demandeur concerné un signal audible qui lui signale ce fait ou un message indicatif correspondant.

11